(19) Europäisches Patentamt
European Patent Office
Office européen des brevets

(11) Numéro de publication: **0 047 215**
**B1**

# (12) FASCICULE DE BREVET EUROPEEN

(45) Date de publication du fascicule du brevet: **08.08.84**

(21) Numéro de dépôt: **81401369.4**

(22) Date de dépôt: **01.09.81**

(51) Int. Cl.³: **C 08 L 29/14**, C 03 C 27/06, B 32 B 17/10

## (54) Mélange de plastifiants pour polyvinylbutyral, application à la réalisation d'intercalaires pour vitrages feuilletés de sécurité et produits ainsi obtenus.

(30) Priorité: **01.09.80 FR 8018862**

(43) Date de publication de la demande: **10.03.82 Bulletin 82/10**

(45) Mention de la délivrance du brevet: **08.08.84 Bulletin 84/32**

(84) Etats contractants désignés: **AT BE DE GB IT LU NL SE**

(56) Documents cités:
**FR - A - 2 209 787**
**FR - A - 2 235 163**

**CHEMICAL ABSTRACTS, vol. 86, no. 6, 7 février 1977, ref. 30536x, page 34 Columbus, Ohio, US**

(73) Titulaire: **SAINT-GOBAIN VITRAGE, Les Miroirs 18, avenue d'Alsace, F-92400 Courbevoie (FR)**
(84) Etats contractants désignés: **BE GB IT LU NL SE AT**

(73) Titulaire: **VEGLA Vereinigte Glaswerke GmbH, Viktoria Allee 3-5, D-5100 Aachen (DE)**
(84) Etats contractants désignés: **DE**

(72) Inventeur: **Dages, Daniel, 1 rue des Closeaux, F-78130 Les Mureaux (FR)**

(74) Mandataire: **Eudes, Marcel et al, Saint-Gobain Recherche 39 Quai Lucien Lefranc, F-93304 Aubervilliers Cedex (FR)**

**EP 0 047 215 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un mélange de plastifiants pour polyvinylbutyral. L'invention concerne également la préparation du polyvinylbutyral plastifié à l'aide de ce mélange et son utilisation sous forme de feuille notamment comme intercalaire pour des vitrages feuilletés de sécurité. Le polyvinylbutyral plastifié est largement utilisé comme couche intercalaire dans les vitrages feuilletés de véhicules à moteur ou encore dans le bâtiment. Ces vitrages feuilletés doivent présenter certaines propriétés, par exemple, une bonne stabilité de la tranche, une bonne tenue à la chaleur et une bonne résistance au choc notamment à basse température. Ces propriétés indispensables sont directement liées à la couche intercalaire de polyvinylbutyral plastifié.

Ainsi, la stabilité de la tranche est liée à la compatibilité du plastifiant avec la résiné de polyvinylbutyral (en abrégé PVB). L'incompatibilité la plus typique est l'exsudation du plastifiant dans le PVB plastifié ce qui entraîne une delamination.

On connaît d'après la publication de brevet européen 0 011 577 l'utilisation d'adipates mixtes d'alkyle et d'alkylaryle comme plastifiant pour PVB. De tels adipates répondent à la formule générale

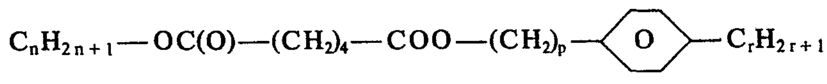

avec n supérieur ou égal à 1 et p + r supérieur ou égal à 1.

Des adipates mixtes convenables répondant à cette formule sont par exemple l'adipate de benzyle et d'octyle, l'adipate de benzyle et d'hexyle, l'adipate de benzyle et de butyle, l'adipate de benzyle et de décyle.

Les adipates mixtes susdits conviennent comme plastifiants pour une résine de P. V. B. de masse moléculaire de 30 000 à 600 000 ayant une teneur de 0 à 10% en poids de groupements esters résiduels calculée comme acétate de polyvinyle, une teneur en hydroxyle de l'ordre de 12 à 25% en poids exprimée comme alcool polyvinylique. Les adipates mixtes ont une bonne compatibilité avec la résine de polyvinylbutyral. Les vitrages feuilletés préparés avec du polyvinylbutyral plastifié par ces adipates mixtes présentent de bonnes propriétés mécaniques, ont une stabilité de tranche excellente et une bonne résistance à la chaleur. Cependant pour certaines applications, la tenue au froid et notamment la résistance aux chocs à froid est insuffisante.

On connaît aussi l'utilisation d'adipates de diakyles, tels l'adipate de dibutyle, l'adipate de di-n-pentyle, l'adipate de di-n-heptyle l'adipate de di-n-octyle comme plastifiants du polyvinylbutyral. Mais ces plastifiants n'ont qu'une compatibilité partielle avec le PVB, d'autant plus faible que la masse moléculaire de l'adipate est plus grande, et/ou que la teneur en groupement hydroxyle de la résine devient plus élevée. Ceci oblige, soit à utiliser des résines à faible teneur en groupements hydroxyles, et par conséquent d'adhérence moins grande, ou bien des adipates de dalkyle de petite masse moléculaire, mais alors les propriétés de tenue des vitrages feuilletés à la chaleur ou à la stabilité de tranche ne sont pas satisfaisantes.

L'invention obvie aux inconvénients cités. Sous un aspect de l'invention, on utilise comme plastifiant du PVB, un mélange comprenant au moins un adipate mixte d'alkyle et d'alkylaryle répondant à la formule

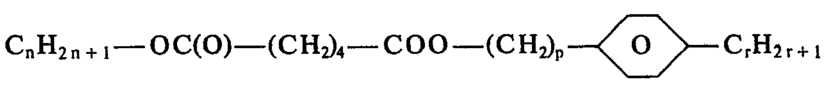

avec n supérieur ou égal à 1 et p + r supérieur ou égal à 1, et au moins un adipate de dialkyle dans lequel le groupement alkyle contient de 3 à 8 atomes de carbone.

Ce mélange de plastifiant procure un polyvinylbutyral plastifié qui, employé sous forme de couche intercalaire dans un vitrage feuilleté, améliore la tenue à froid du vitrage, notamment sa résistance aux chocs tout en fournissant une bonne stabilité de tranche ainsi qu'une bonne tenue à la chaleur.

Cette amélioration est surprenante car il est connu qu'un mélange de plastifiante procure généralement une résistance aux chocs à froid d'une valeur comprise entre celles procurées par chacun des plastifiants utilisés seuls. Ainsi, un mélange d'adipate de di-n-hexyle et de phtalate de butyle et benzyle fournit une réstistance aux chocs à froid comprise entre les valeurs des résistances obtenues en utilisant isolemment les deux plastifiants.

Des adipates mixtes répondant à la formule générale ci-dessus et convenant particulièrement bien comme composant du mélange de plastifiant sont l'adipate de benzyle et d'octyle, l'adipate de benzyle et d'hexyle, l'adipate de benzyle et de butyle, l'adipate de benzyle et de décyle.

Des adipates de dialkyle convenant particulièrement bien sont l'adipate de dibutyle, l'adipate de di-n-pentyle, l'adipate de di-n-hexyle, l'adipate de di-n-heptyle.

Sous un des aspects de l'invention, on prépare un polyvinylbutyral plastifié à laide d'un mélange de plastifiants pouvant comprendre de 10 à 90% d'au moins un adipate mixte d'alkyle et d'alkylaryle et de 90 à 10% d'au moins un adipate de dialkyle.

Les résines de PVB pouvant être plastifiées selon l'invention ont une masse moléculaire de 30 000 à 600 000, une teneur de 0 à 10% en poids de groupements esters résiduels calculée comme acétate de

polyvinyle, une teneur en hydroxyle, de l'ordre de 12 à 25% en poids exprimée comme alcool polyvinylique.

De préférence, ces résines de polyvinylbutyral sont préparées comme il est dit dans la publication de brevet français FR 2 401 941 et leur teneur en groupement esters résiduels est inférieure à 5%.

Les exemples suivants illustrent les bons résultats obtenus en utilisant un mélange d'adipate de dialkyle et d'adipate mixte d'alkyle et d'alkyle aryle selon l'invention.

Les méthodes d'essais utilisées pour montrer les avantages de la présente invention sont décrites ci-après:

Resistance aux chocs a differentes temperatures

Les échantillon de vitrages feuilletés utilisés pour ce test et les suivants sont préparés comme suit: la feuille de polyvinylbutyral plastifié de 0,76 mm d'épaisseur est préalablement conditionnée en humidité puis placée entre deux feuilles de verre planes de 30,5 · 30,5 cm et de 3 mm d'épaisseur. Ces échantillons sont alors comprimé sous une pression de 10 bars à 138° C pendant 20 minutés en autoclave. Ils sont ensuite divisés en trois groupes pour être conditionnés 24 heures à des températures bien déterminées (−20° C; −10° C; 20° C).

Un premier essai de résistance au choc est effectué avec une bille d'acier d'un poids de 2,270 kg que l'on fait tomber sur la partie centrale d'un échantillon reposant sur un cadre en bois. On détermine la hauteur approximative pour laquelle 90% des échantillons testés à la température choisie résistent à la chute de la bille sans être traversés.

Un autre essai de résistance au choc à froid est effectué avec une bille d'acier de 0,227 kg, de diamètre 38 mm que l'on fait tomber d'une hauteur de 10 m sur un échantillon de verre feuilleté comme précédemment. On observe si les échantillons sont traversés ou non par le projectile et on mesure la masse de verre détachée après le choc. On note aussi si des déchirures ou des fentes ont été produites dans la couche intercalaire apès l'impact. Un essai est considéré comme bon si d'une part la masse de verre qui se détache du côté opposé à l'impact est inférieure à 25 g et que d'autre part la bille ne traverse pas le feuilleté. La présence de fente indique seulement une moins bonne tenue au choc à froid.

Resistance a la chaleur

Trois tests de résistance à la chaleur sont prévus.

Dans un premier test, des échantillons de vitrages feuilletés sont placés dans de l'eau bouillante pendant 2 heures et sont examinés ensuite du point de vue de la formation de bulles. Les échantillons exempts de bulles sont alors remis dans l'eau bouillante pendant 4 heures et de nouveau examinés.

Dans un second test dit test à la chaleur sèche, des échantillons de vitrages feuilletés sont placés dans une étuve sèche à 120° C pendant 30 minutes. Les échantillons exempts de bulles sont remis en étuve pendant 2 H et observés de nouveau.

Dans un troisième test, dit test à la chaleur humide, des échantillons de vitrages feuilletés sont maintenus verticalement pendant 2 semaines dans une enceinte close où régnent une humidité relative de 100% et une température de 55° C. Les échantillons sont examinés au point de vue de la formation de bulles de la déstratification des zones marginales ainsi que de la formation d'un voile blanc dans ces zones.

Les exemples suivants n'ont aucun caractère limitatif, ils visent seulement à illustrer l'utilisation du mélange d'adipate mixte, d'alkyle et d'alkyle aryle et d'adipate de dialkyle pour plastifier les résines de polyvinylbutyral.

Les résines ont été préparées comme il est dit dans la publication française 2 401 941.

Le polyvinylbutyral plastifié est obtenu par mélange de la résine de PVB avec le plastifiant, qui est un mélange d'adipate d'alkyle et d'alkyle aryle et d'adipate de dialkyle. La quantité de plastifiant peut varier en fonction des propriétés désirées du PVB plastifié. On utilise généralement le plastifiant dans des proportions telles que la teneur en plastifiant du PVB plastifié est comprise entre 15 et 65%.

La plastifications s'effectue d'après les méthodes classiques bien connues de l'homme de métier.

On peut par exemple placer la résine de PVB dans un mélangeur et ajouter la quantité déterminée de plastifiant, progressivement et sous agitation. Le mélange peut s'effectuer à température ordinaire et durant 30 minutes environ, mais aussi à des températures plus élevées. On peut aussi utiliser la méthode décrite dans la publication de brevet français 2 235 163.

On peut encore utiliser les mélangeurs décrits dans la notice parue dans la publication »Les techniques de l'ingénieur« (référence J1930). Après mélange, on obtient une masse que l'on peut extruder pour fabriquer des feuilles ayant par exemple une épaisseur de 0,76 mm. Ces feuilles sont utilisées comme couches intercalaires dans des vitrages feuilletés.

Exemples

Les exemples 1 à 8 montrent que la résistance au choc à froid des feuilletés dont l'intercalaire de PVB est plastifié avec un mélange d'adipates selon l'invention est améliorée.

Les abréviations ont la signification suivante:

B. O. A: adipate de benzyle et d'octyle
n. DAA: adipate de di-n-amyle ou adipate de di-n-pentyle
n. DHA: adipate de di-n-hexyle
BBP: phtalate de butyle et de benzyle
3GH: di(éthyl-2-butyrate) de triéthylène glycol

Tableau 1

| Exemple n° | nature des plastifiants 1 | 2 | rapport pondéral entre plastifiants 1/2 | total plastifiants p.c.r. | test à la chute de bille de 2,270 kg en mètres −10° C | +20° C |
|---|---|---|---|---|---|---|
| 1 | BOA | – | – | 37 | 2,7 | 7,2 |
| 2 | n.DHA | – | – | 37 | 2,4 | 7,5 |
| 3 | n.DAA | – | – | 37 | 3,6 | 4,8 |
| 4 | BBP | – | – | 40 | 0,3 | 7,5 |
| 5 | BOA | n.DHA | 80/20 | 37 | 3,6 | 6,6 |
| 6 | BOA | n.DAA | 80/20 | 37 | 4,8 | 6,6 |
| 7 | n.DHA | BBP | 80/20 | 37 | 2,1 | 6,9 |
| 8 | 3GH | – | – | 41 | 2,7 | 6,6 |

La première colonne du tableau indique le numéro de l'essai. Les seconde et troisième colonnes indiquent la nature des plastifants ajoutés à la résine de PVB, la quatrième le rapport entre le ler et 2 ème plastifiant du mélange des plastifiants. La colonne n° 5 indique la teneur totale en plastifiant exprimée en parties pour cent de résine (en abrégé p. c. r.) les colonnes 6 et 7 indiquent les résultats des tests de chute de billes exprimés pour chaque exemple en mètres , la colonne 6 correspondant à des essais effectués à −10° C et la colonne 7 à +20° C.

Ce tableau montre que le mélange du BOA avec de l'adipate de di-n-hexyle ou de di-n-pentyle donne un feuilleté dont la résistance au choc à −10° C est supérieure à celle obtenue avec les plastifiants adipates mixtes ou adipates de dialkyle utilisés seuls avec la résine de PVB (exemple 1, 2, 3, 5, 6). Cette amélioration est inattendue, car, par exemple le mélange adipate de di-n-hexyle et de phtalate de butyle et benzyle (exemple 7) donne un résultat au choc à froid dont la valeur est comprise entre celles données par chacun des plastifiants seuls (exemples 2, 4).

Tableau 2

Les exemples du tableau 2 illustrent le comportenent au choc à plus basse température (−20° C) avec la bille de 0,227 kg. Comme pour le tableau 1, les colonnes 1, 2, 3, 4, 5 ont les mêmes significations, les colonnes 6, 7, 8, indiquent les résultats après l'impact de la bille de 0,227 kg, la colonne 6 précisant le nombre de feuilletés traversés par rapport au nombre de d'échantillons testés, la colonne 7 dénombrant ceux dont l'intercalaire est fendu et la colonne 8 indiquant ceux qui après le choc ne présentent ni fente, ni masse de verre détachée suprieure 25 g.

Le tableau 2 montre le bon comportement des feuilletés dont l'intercalaire est plastifié avec les mélange d'adipates selon l'invention.

Tableau 3

Le tableau 3 suivant illustre le fait que les mélanges d'adipate selon l'invention donnent au feuilleté de bonnes propriétés à chaud et en particulier des propriétés que ne donnent pas les adipates dialkyliques emplyés seuls.

Tableau 2

| Exemples n° | nature des plastifiants 1 | 2 | rapport pondéral entre plastifiants 1/2 | total plastifiants p.c.r. | test à la chute de bille de 0,277 kg —20° C traversés | fendus | sans fente |
|---|---|---|---|---|---|---|---|
| 9 | BOA | — | — | 38 | 1/6 | 4/6 | 1/6 |
| 10 | n.DHA | — | — | 34 | 1/6 | 3/6 | 2/6 |
| 11 | BBP | — | — | 40 | 6/6 | — | 0/6 |
| 12 | BOA | n.DAA | 80/20 | 37 | 0/6 | 0/6 | 6/6 |
| 13 | BOA | n.DAA | 75/25 | 37 | 0/6 | 1/6 | 5/6 |
| 14 | BOA | n.DAA | 70/30 | 37 | 0/6 | 1/6 | 5/6 |
| 15 | BOA | n.DAA | 65/35 | 37 | 0/6 | 1/6 | 5/6 |
| 16 | BOA | n.DAA | 50/50 | 37 | 0/6 | 1/6 | 5/6 |
| 17 | BOA | n.DHA | 65/35 | 37 | 0/6 | 0/6 | 6/6 |
| 18 | BOA | n.DHA | 50/50 | 35 | 0/6 | 2/6 | 4/6 |
| 19 | BOA | n.DHA | 50/50 | 37 | 1/6 | 2/6 | 3/6 |
| 20 | n.DHA | BBP | 80/20 | 37 | 4/6 | 2/6 | 0/6 |

Tableau 3

| Exemples n° | nature des plastifiants 1 | 2 | rapport pondéral entre plastifiants 1/2 | total plastifiants p.c.r. | test à l'eau bouillante | test à la chaleur sèche | test à la chaleur humide |
|---|---|---|---|---|---|---|---|
| 21 | BOA | — | — | 37 | bon | bon | + |
| 22 | n.DAA | — | — | 37 | bulles | bulles | 0 |
| 23 | n.DHA | — | — | 37 | bon | bon | 0 |
| 24 | BOA | n.DAA | 80/20 | 37 | bon | bon | + |
| 25 | BOA | n.DAA | 70/30 | 37 | bon | bon | + |
| 26 | BOA | n.DHA | 80/20 | 37 | bon | bon | + |
| 27 | BOA | n.DHA | 65/35 | 37 | bon | bon | + |
| 28 | BOA | n.DHA | 50/50 | 35 | bon | bon | + |
| 29 | T.O.F. | — | — | 37 | bon | bon | + |
| 30 | BOA | T.O.F. | 80/20 | 37 | bulles | bulles | + |
| 31 (témoin) | 3GH | — | — | 41 | bon | bon | 0 |

T. O. F.: Tris(ethyl-2 hexyl)phosphate

Test à la chaleur humide:

O = équivalent au témoin — formation d'une bande blanche en périphérie, mais disparait — pas de délamination

— = moins bon que le témoin

+ = meilleur que le témoin

Vieillissement en station climatique

Après six mois d'observation, les vitrages feuilletés préparés avec un intercalaire en PVB plastifié avec les mélanges d'adipates selon l'invention, tels les mélanges adipates de benzyle et d'octyle/adipate de di-n-pentyle ou adipates de benzyle et d'octyle/adipate de di-n-hexyle, ne montrent aucune altération de la tranche, contraitement à ce que l'on observe avec l'adipate de di-n-pentyle.

L'invention envisage également l'utilisation de différents additifs, notamment des colorants, des pigments, des stabilisants, des antioxydants, des antiultraviolets ou des modificateurs d'adhérence.

**Revendications**

1. Plastifiant pour intercalaire en polyvinylbutyral dans un vitrage feuilleté, caractérisé en ce qu'il comprend essentiellement un mélange d'au moins un adipate d'alkyle et d'alkylaryle de formule générale

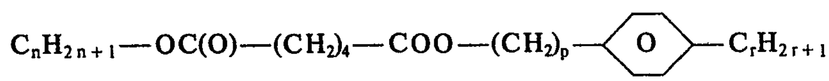

avec n supérieur ou égal à 1 et p + r supérieur ou égal à 1, et au moins un adipate de dialkyle dans lequel le groupement alkyle contient de 3 à 8 atomes de carbone.

2. Plastifiant selon la revendication 1, caractérisé en ce que le groupement alkylaryle de l'adipate d'alkyle et d'alkylaryle est le benzyle et en ce que n'est compris entre 2 et 10.

3. Plastifiant selon une des revendications 1 ou 2, caractérisé en ce que l'adipate d'alkyle et d'alkylaryle est choisi parmi l'adipate de benzyle et d'octyle, l'adipate de benzyle et d'hexyle, l'adipate de benzyle et de butyle, l'adipate de benzyle et de décyle.

4. Plastifiant selon une des revendication 1 à 3, caractérisé en ce qu'il comprend de 10 à 90% d'au moins un adipate d'alkyle et d'alkylaryle, le reste étant d'au moins un adipate de dialkyle.

5. Plastifiant selon une des revendications 1 à 4, caractérisé en ce que l'adipate de dialkyle est choisi parmi l'adipate de di-butyle l'adipate de di-n-pentyle, l'adipate de di-n-hexyle, l'adipate de di-n-heptyle.

6. Plastifiant selon une des revendications de 1 à 5, caractérisé en ce qu'il est choisit parmi le mélange d'adipate de benzyle et d'octyle avec de l'adipate de di-n-pentyle et le mélange d'adipate de benzyle et d'octyle avec de l'adipate de di-n-hexyle.

7. Procédé de fabrication d'un polyvinylbutyral plastifié utilisé comme intercalaire dans un vitrage feuilleté, caractérisé en ce qu'on utilise comme plastifiant un mélange de plastifiants selon une des revendications 1 à 6.

8. Polyvinylbutyral plastifié obtenu par le procédé selon la revendication 7.

9. Intercalaire en polyvinylbutyral plastifié selon la revendication 8.

10. Vitrage feuilleté, notamment vitrage de véhicule à moteur ou de bâtiment, caractérisé en ce qu'il comprend au moins un intercalaire selon la revendication 9.

**Patentansprüche**

1. Weichmacher für eine Zwischenschicht aus Polyvinylbutyral in einer Verbundglasscheibe, dadurch gekennzeichnet, daß sie im wesentlichen eine Mischung aus wenigstens einem Alkyl-Alkylarylrest-adipat der allgemeinen Formel

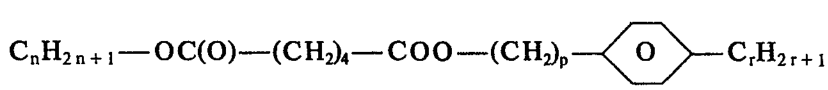

wobei n größer oder gleich 1 und p + r größer oder gleich 1 ist, und wenigstens einen Di-alkyl-adipat umfaßt, in dem die Alkylgruppe 3 bis 8 Kohlenstoffatome enthält.

2. Weichmacher nach Anspruch 1, dadurch gekennzeichnet, daß die Alkylarylgruppe des Alkyl-alkylaryl-adipats Benzyl ist, und daß n zwischen 2 und 10 beträgt.

3. Weichmacher nach einem der Ansprüche 1 oder 2, dadurch gekennzeichnet, daß das Alkyl-alkylaryl-adipat aus dem Benzyl-octyl-adipat, dem Benzyl-hexyl-adipat, dem Benzyl-Butyl-adipat, und dem Benzyl-decyl-adipat ausgewählt ist.

4. Weichmacher nach einem der Ansprüche 1 bis 3, dadurch gekennzeichnet, daß er 10 bis 90% wenigstens eines Alkyl-alkylaryl-adipats aufweist, wobei der Rest wenigstens ein Di-alkyl-adipat ist.

5. Weichmacher nach einem der Ansprüche 1 bis 4, dadurch gekennzeichnet, daß das Di-alkyl-adipat aus dem Di-butyl-adipat, dem Di-n-pentyl-adipat, dem Di-n-hexyl-adipat und dem Di-n-heptyl-adipat ausgewählt ist.

6. Weichmacher nach einem der Ansprüche 1 bis 5, dadurch gekennzeichnet, daß er aus der Mischung von Benzyl-octyl-adipat mit Di-n-pentyl-adipat und der Mischung von Benzyl-octyl-adipat mit Di-n-hexyl-adipat ausgewählt ist.

7. Verfahren zur Herstellung von weichgemachten Polyvinylbutyral für die Anwendung als Zwischenschicht in einer Verbundglasscheibe, dadurch gekennzeichnet, daß man als Weichmacher eine Mischung von Weichmachern nach einem der Ansprüche 1 bis 6 verwendet.

8. Weichgemachtes Polyvinylbutylral, das durch das Verfahren nach Anspruch 7 erhalten wurde.

9. Zwischenschicht aus Polyvinylbutyral, das nach Anspruch 8 weichgemacht ist.

10. Verbundglasscheibe, insbesondere Autoglasscheibe oder Bauglasscheibe, dadurch gekennzeichnet, daß sie wenigstens eine Zwischenschicht nach Anspruch 9 aufweist.

**Claims**

1. A plasticiser for an intermediate sheet of polyvinylbutyral in a laminated pane, characterised in that it comprises essentially a mixture of at least one alkyl alkylaryl adipate of general formula:

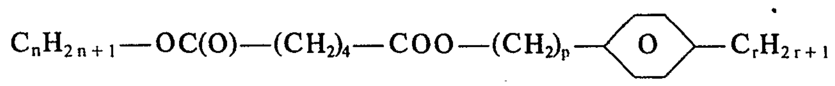

with n greater than or equal to 1 and p + r greater than or equal to 1, and at least one dialkyl adipate in which the alkyl group contains from 3 to 8 carbon atoms.

2. A plasticiser according to claim 1, characterised in that the alkylaryl group of the alkyl alkylaryl adipate is benzyl and n is from 2 to 10.

3. A plasticiser according to one of claims 1 and 2, characterised in that the alkyl alkylaryl adipate is selected from benzyl actyl adipate, benzyl hexyl adipate, butyl benzyl adipate and benzyl decyl adipate.

4. A plasticiser according to one of claims 1 to 3, characterised in that it comprises from 10 to 90% of at least one alkyl alkylaryl adipate, the remainder being at least one dialkyl adipate.

5. A plasticiser according to one of claims 1 to 4, characterised in that the dialkyl adipate is selected from dibutyl adipate, di-n-pentyl adipate, di-n-hexyl adipate and di-n-heptyl adipate.

6. A plasticiser according to one of claims 1 to 5, characterised in that it is selected from a mixture of benzyl octyl adipate with di-n-pentyl adipate and a mixture of benzyl octyl adipate with di-n-hexyl adipate.

7. Method of making a plasticised polyvinylbutyral used as an intermediate layer in a laminated pane, characterised in that there is used as a plasticiser a mixture of plasticisiers according to one of claims 1 to 6.

8. Plasticised polyvinylbutyral obtained by a method according to claim 7.

9. An intermediate layer of plasticised polyvinylbutyral according to claim 8.

10. A laminated pane, notably for a window of a vehicle or building, characterised in that it comprises at least one intermediate layer according to claim 9.